(19) **Europäisches Patentamt**
**European Patent Office**
**Office européen des brevets**

(11) **EP 3 214 411 B1**

(12) **EUROPÄISCHE PATENTSCHRIFT**

(45) Veröffentlichungstag und Bekanntmachung des Hinweises auf die Patenterteilung:
**20.06.2018 Patentblatt 2018/25**

(51) Int Cl.:
***G01D 5/251*** *(2006.01)*

(21) Anmeldenummer: **17000321.4**

(22) Anmeldetag: **02.03.2017**

(54) **POSITIONSBESTIMMUNGSSENSOREINHEIT**

POSITION DETERMINING SENSOR UNIT

UNITÉ DE CAPTEUR DE DÉTERMINATION DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2016 DE 102016002487**

(43) Veröffentlichungstag der Anmeldung:
**06.09.2017 Patentblatt 2017/36**

(73) Patentinhaber: **TDK-Micronas GmbH**
**79108 Freiburg (DE)**

(72) Erfinder:
• **Jörg, Franke**
**79117 Freiburg (DE)**
• **Klaus, Heberle**
**79312 Emmendingen (DE)**

(74) Vertreter: **Koch Müller**
**Patentanwaltsgesellschaft mbH**
**Maaßstraße 32/1**
**69123 Heidelberg (DE)**

(56) Entgegenhaltungen:
**WO-A1-2015/192965 DE-B4-112009 004 394**
**DE-U1- 20 009 155 US-A1- 2012 136 541**

**Beschreibung**

Die Erfindung betrifft eine Positionsbestimmungssensoreinheit.

Aus der WO 2015/192965 A1 ist eine Sensoreinheit zur Bestimmung einer linearen Position entlang einer Strecke bekannt. Die Sensoreinheit weist eine Vielzahl von in einer Reihe entlang der Strecke angeordneten Hallschaltern, einen über der Reihe von Hallschaltern beweglichen Geber, eine Vielzahl von in Reihe geschalteten Widerständen und eine Spannungsmesseinheit auf, wobei jeweils ein Hallschalter einen zwischen jeweils zwei Widerständen liegenden Spannungsknoten schaltbar mit einem Referenzpotential verbindet. Mittels des mit der Spannungsmessungsmesseinheit ermittelten Spannungsabfalls wird die Position des Gebers über den aufgereihten Hallschaltern ermittelt.

Aus der DE 11 2009 004 394 B4 ist Master-Slave-System für mehrere Sensoren beschrieben, wobei die Sensoren in einer sogenannten Daisy-Chain-Anordnung angeordnet sind.

Vor diesem Hintergrund besteht die Aufgabe der Erfindung darin, eine Vorrichtung anzugeben, die den Stand der Technik weiterbildet.

Die Aufgabe wird durch eine Positionsbestimmungssensoreinheit mit den Merkmalen des Patentanspruchs 1 gelöst. Vorteilhafte Ausgestaltungen der Erfindung sind Gegenstand von Unteransprüchen.

Gemäß dem Gegenstand der Erfindung weist eine Positionsbestimmungssensoreinheit eine Anzahl von N, in vorbestimmten Abständen an Positionen entlang einer vorzugsweise geraden oder ringförmigen Strecke reihenförmig angeordneten, gleichartigen Sensoren, einen Geber und eine Strommesseinheit auf.

Der Geber weist ein zumindest entlang der gesamten Strecke bewegbares erstes Ende und eine von dem ersten Ende parallel zu der Strecke verlaufende Länge auf.

Jeder Sensor weist einen ersten Versorgungsspannungsanschluss, einen zweiten Versorgungsspannungsanschluss und einen Schaltausgang auf, wobei der Schaltausgang in Abhängigkeit von einer Schwellwertüberschreitung oder einer Schwellwertunterschreitung eines Sensorsignals in einen on-Zustand oder einen off-Zustand geschaltet ist und der erste Versorgungsspannungsanschluss jedes Sensors mit einer ersten Versorgungsspannung verbunden ist. Ein erster Sensor ist an einem Anfang der Strecke angeordnet und ein letzter Sensor an einem Ende der Strecke.

Der erste Sensor ist mittels des zweiten Versorgungsspannungsanschlusses mit einer zweiten Versorgungsspannung, insbesondere mit einem Massepotential verbunden und weist eine Stromaufnahme Isup auf.

Der zweite Versorgungsspannungsanschluss jedes weiteren Sensor Sn>1 ist mit dem Schaltausgang des vorausgehenden Sensors Sn-1 verbunden, wobei der jeweilige Sensor mittels des Schaltausgangs des vorausgehenden Sensors Sn-1 einschaltbar oder ausschaltbar ist und im eingeschalteten Zustand eine Stromabnahme Isup aufweist.

Hierdurch nimmt der zweite Versorgungsspannungsanschluss des ersten Sensors den gesamten Strom der entlang der Strecke eingeschalten Sensoren auf.

Mittels des Schaltausgangs des unmittelbar vorausgehenden Sensors sind die jeweils weiteren Sensoren einschaltbar oder ausschaltbar und weisen jeweils im eingeschalteten Zustand eine Stromaufnahme Isup auf.

Die Strommesseinheit ist vor dem ersten Versorgungsspannungsanschluss des ersten Sensors oder vor dem zweiten Versorgungsspannungsanschluss des ersten Sensors angeordnet.

Die Stromaufnahmen Isup aller eingeschalteten Sensoren tragen zu einem mittels der Strommesseinheit gemessenen Summenstrom Isum bei, wobei der Summenstrom Isum ein Vielfaches der Stromaufnahmen Isup beträgt und zu einer Position des ersten Endes des Gebers proportional ist.

Die kaskadenartige Verschaltung der Sensoren wird häufig auch als Daisy Chain bezeichnet. Während sich der erste Sensor bei Inbetriebnahme der Positionsbestimmungssensoreinheit immer in dem eingeschalteten Zustand befindet, werden folgende Sensoren in der Daisy Chain Anordnung jeweils erst aufgrund einer Schwellwertüberschreitung des Sensorsignals eines unmittelbar vorhergehenden Sensors eingeschaltet. Die Schwellwertüberschreitung eines Sensorsignals eines Sensors wird durch den Geber ausgelöst.

Für die Positionsbestimmung wird ausgenutzt, dass ein eingeschalteter Sensor im Unterschied zu einem ausgeschalteten Sensor eine von Null verschiedene Stromaufnahme aufweist. Anhand der Messung der Gesamtstromaufnahme, hier als Summenstrom bezeichnet, lässt sich auf die Anzahl der eingeschalteten Sensoren und hierdurch auf die Position des für das Einschalten verantwortlichen Gebers schließen.

Ein Vorteil der erfindungsgemäßen Vorrichtung ist, dass nicht mit den einzelnen Sensoren kommuniziert werden muss bzw. nicht die Ausgangssignale der Sensoren ausgewertet werden müssen, sondern der Summenstrom in Verbindung mit den festen Positionen der Sensoren entlang der Strecke bereits die Information über die Position des Gebers enthalten. Hierdurch erübrigt sich insbesondere eine aufwändige Schaltung zur Adressvergabe und Adressausgabe. Auch eine Bus-Anbindung der Sensoren erübrigt sich.

Mit der erfindungsgemäßen Positionsbestimmungseinheit sind Wegmessungen über lange Bereiche möglich, wie sie beispielsweise für Sitzschienen in Autos oder für eine Füllstandsmessung notwendig sind.

Gemäß einer ersten alternativen Ausführungsform ist der on-Zustand des Schaltausgangs jedes Sensors bei Überschreiten eines ersten Schwellwerts geschaltet, der off-Zustand des Schaltausgangs jedes Sensors bei Unterschreiten des ersten Schwellwerts geschaltet und die Länge des Gebers erstreckt sich von dem ersten Ende mindestens bis zu dem ersten Sensor S1, wobei eine Position des ersten Endes des Gebers im Bereich der Position des m-ten Sensors einem Summenstrom $I_{sum} = (m+1)*I_{sup}$ entspricht.

In der vorbeschriebenen nicht-invertierenden Ausführungsform ist der erste Sensor immer eingeschaltet, während alle weiteren Sensoren erst aufgrund einer Schwellwertüberschreitung des Sensorsignals eines unmittelbar vorausgehenden Sensors eingeschaltet sind. Wird das erste Ende des Gebers bis über den ersten Sensor bewegt, so überschreitet das Sensorsignal den ersten Schwellwert und schaltet den unmittelbar folgenden Sensor ein. Wird das erste Ende des Gebers weiter bis über den zweiten Sensor bewegt, so schaltet dieser den unmittelbar folgenden dritten Sensor ein usw.

Um eine Position des ersten Endes des Gebers ermitteln zu können, muss in der nicht-invertierenden Ausführungsform gewährleistet sein, dass der Geber eine ausreichende Länge aufweist, so dass sich der Geber bei einer Bewegung entlang der gesamten Strecke immer von dem ersten Ende mindestens bis über den ersten Sensor erstreckt, da ansonsten dieser alle weiteren Sensoren abschaltet.

Die Position des ersten Endes des Gebers lässt sich zwischen einer Position 0 vor dem ersten Sensor (Schaltausgang des ersten Sensors im off-Zustand, $I_{sum} = 1*I_{sup}$) und einer Position PN-1 des vorletzten Sensors (Schaltausgang des vorletzten Sensors im on-Zustand, $I_{sum} = N*I_{sup}$) bestimmen.

Gemäß einer Weiterbildung zur Erhöhung der Genauigkeit der Positionsbestimmung weist jeder Sensor mindestens einen ersten Schwellwert und einen zweiten Schwellwert aufweist und die Länge des Gebers erstreckt sich von dem ersten Ende mindestens bis zu dem ersten Sensor S1, wobei der zweite Schwellwert kleiner als der erste Schwellwert ist, der on-Zustand des Schaltausgangs jedes Sensors bei Überschreiten des ersten Schwellwerts geschaltet ist, der off-Zustand des Schaltausgangs jedes Sensors bei Unterschreiten des zweiten Schwellwerts geschaltet ist, der on-Zustand des Schaltausgangs jedes Sensors für zwischen dem zweiten Schwellwert und dem ersten Schwellwert liegende Sensorsignale pulsweitenmoduliert geschaltet ist, ein Tastgrad der Pulsweitenmodulation proportional zu dem Sensorsignal ist, die Stromaufnahme $I_{pwm}$ eines mit dem pulsweitenmoduliert geschalteten Schaltausgangs verbundenen Sensors proportional zu dem Tastgrad und kleiner als die Stromaufnahme $I_{sup}$ im on-Zustand ist und eine Position des ersten Endes des Gebers im Bereich der Position des m-ten Sensors $S_m$ einem Summenstrom $I_{sum} = m*I_{sup} + I_{pwm}$ entspricht.

Um eine zuverlässige Abbildung der Position mittels des pulsweitenmodulierten Schaltens eines Sensors sicherzustellen, sollte jeder Sensor eine nominale Stromaufnahme in möglichst kurzer Zeit erreichen. Die Zeit bis zum Erreichen einer nominalen Stromaufnahme sollte bevorzugt deutlich unter einer Periodendauer der Pulsweitenmodulation liegen. Hierdurch weist ein mittels des Schaltausgangs des unmittelbar vorausgehenden Sensors pulsweitenmoduliert geschalteter Sensor eine von Null verschiedene Stromaufnahme $I_{pwm}$ auf, die jedoch kleiner als die Stromaufnahme $I_{sup}$ im vollständig angeschalteten Zustand ist. Die Stromaufnahme $I_{pwm}$ ist proportional zu der Dauer des on-Zustands des pulsweitenmodulierten Schaltausgangs, d.h. zu dem Tastgrad der Pulsweitenmodulation, wobei der Tastgrad das Verhältnis von on-Zustand zu off-Zustand innerhalb einer Periode der Pulsweitenmodulation angibt. Über den Tastgrad wird ein zwischen dem ersten und dem zweiten Schwellwert liegendes Sensorsignal bzw. die Höhe des Sensorsignals auf die Stromaufnahme $I_{pwm}$ abgebildet und ist so durch Messung des Summenstroms bestimmbar.

In der pulsweitenmodulierten, nicht-invertierenden Ausführungsform setzt sich der Summenstrom aus einem ganzzahligen Vielfachen der Stromaufnahme $I_{sup}$ für alle vollständig eingeschalteten Sensoren und gegebenenfalls einem Anteil $I_{pwm}$ mit $0 < I_{pwm} < I_{sup}$ eines pulsweitenmoduliert geschalteten Sensors zusammen. Neben einer von dem ganzzahligen Vielfachen gelieferten absoluten Position auf einer von den Sensorabständen gerasterten Skala erhält man somit mittels des Rests eine zweite Position, wobei die zweite Position eine relative Positionsinformation auf einer feineren Skala enthält.

Für die Auswertung wird das PWM Signal beispielsweise über einen Tiefpass-Filter in einen linearen Strom- bzw. Spannungslevel gewandelt, z.B. mittels eines Shunt-Widerstands, und kann beispielsweise reale Werte zwischen 0 und 1 mit einer Auflösung von 8 bis 16 Bit einnehmen. Die mittels des PWM Signal bestimmte relative Position wird somit in einem analogen Modus bestimmt, während die erste absolute Position in einem digitalen Modus (ganzzahliges Vielfaches) ermittelt wird.

Alternativ sind die Sensoren so ausgelegt, dass jeder Sensor für zwischen dem ersten und dem zweiten Sensorsignal liegende Sensorsignale die eigene Stromaufnahme per Pulsweitenmodulation zwischen $I_{sup}$ und $2*I_{sup}$ steuert, anstatt den Schaltausgang pulsweitenmoduliert zu Schalten. Hierdurch wird die relative Position des ersten Endes des Gebers über einem m-ten Sensor durch Pulsweitenmodulation der Stromaufnahme des m-ten Sensors und nicht durch die Stromaufnahme des (m+1)-ten Sensors abgebildet. An einer weiteren Auswertung ändert sich jedoch nichts.

Anstatt den zusätzlichen Strom $I_{pwm}$ durch eine Pulsweitenmodulation der Stromaufnahme des Sensors zu erzeugen wird der die relative Position abbildende Strom $I_{pwm}$ in einer weiteren alternativen Ausführungsform mittels eines von einem Digital-Analog-Wandler zwischen zwischen $I_{sup}$ und $2*I_{sup}$ geregelten Analogausgangs bereitgestellt.

In einer zweiten alternativen Ausführungsform ist der off-Zustand des Schaltausgangs jedes Sensors bei Überschreitung eines ersten Schwellwerts geschaltet, der on-Zustand des Schaltausgangs jedes Sensors bei Unterschreiten des ersten Schwellwerts geschaltet und der Geber erstreckt sich von dem ersten Ende zumindest entlang eines Teilbereichs der Strecke in Richtung des letzten Sensors, wobei eine Position des ersten Endes des Gebers im Bereich der Position des m-ten Sensors einem Summenstrom $Isum = m*Isup$ entspricht.

In der invertierenden Ausführungsform sind in Abwesenheit des Gebers alle Sensoren eingeschaltet, da für alle Sensorsignale eine Schwellwertunterschreitung vorliegt. Der Geber bewirkt ein Ausschalten der Sensoren, wobei der Geber in der invertierenden Ausführungsform eine kurze Länge aufweisen kann, wobei sich die Länge von dem ersten Ende in Richtung des letzten Sensors erstreckt. Die Länge des Gebers muss sich lediglich ausreichen, um eine Schwellwertüberschreitung innerhalb eines Sensors zu bewirken, wenn sich der Geber über dem Sensor befindet.

Befindet sich das erste Ende über dem ersten Sensor, so detektiert dieser eine Grenzwertüberschreitung und der Schaltausgang des ersten Sensors ist in den off-Zustand geschaltet, so dass alle folgenden Sensoren ausgeschaltet werden. Bewegt sich das erste Ende des Gebers über den zweiten Sensor, so detektiert der erste Sensor eine Schwellwertunterschreitung und Schaltet den unmittelbar folgenden zweiten Sensor ein. Somit sind immer alle aufeinanderfolgenden Sensoren von dem ersten Sensor bis zu dem Sensor eingeschaltet, über dem sich das erste Ende des Gebers befindet. Das mittels des gemessenen Summenstroms bestimmbare Vielfache der Stromaufnahme gibt somit die Nummer des Sensors in der Reihe der entlang der Strecke angeordneten Sensoren an, über dem sich das erste Ende des Gebers befindet.

Die Position des ersten Endes des Gebers kann zwischen einer Position 1 über dem ersten Sensor (Schaltausgang des ersten Sensors im off-Zustand, $Isum = 1*Isup$) und einer Position PN des letzten Sensors (Schaltausgang des vorletzten Sensors im on-Zustand, $Isum = N*Isup$) bestimmt werden.

In einer Weiterbildung zur Erhöhung der Genauigkeit der Positionsbestimmung weist jeder Sensor mindestens einen ersten Schwellwert und einen zweiten Schwellwert auf und der Geber erstreckt sich von dem ersten Ende zumindest entlang eines Teilbereichs der Strecke in Richtung des letzten Sensors, wobei der zweite Schwellwert kleiner als der erste Schwellwert ist, der off-Zustand des Schaltausgangs jedes Sensors bei Überschreiten des ersten Schwellwerts geschaltet ist, der on-Zustand des Schaltausgangs jedes Sensors bei Unterschreiten des zweiten Schwellwerts geschaltet ist, der off-Zustand des Schaltausgangs jedes Sensors für zwischen dem ersten Schwellwert und dem zweiten Schwellwert liegende Sensorsignale pulsweitenmoduliert geschaltet ist, der Tastgrad der Pulsweitenmodulation umgekehrt proportional zu dem Sensorsignal ist, die Stromaufnahme Ipwm eines mit dem pulsweitenmoduliert geschalteten Schaltausgangs verbundenen Sensors proportional zu dem Tastgrad und kleiner als die Stromaufnahme Isup im on-Zustand ist, eine Position des Ersten Endes des Gebers im Bereich der Position des m-ten Sensors einem Summenstrom $Isum = (m-1)*Isup + Ipwm$ entspricht.

Die vorbeschriebene Ausführungsform stellt eine invertierende, pulsweitenmodulierte Ausführungsform dar, d.h. in Abwesenheit des Gebers sind alle Sensoren eingeschaltet und der Geber bewirkt ein Ausschalten der Sensoren, wobei eine Position innerhalb eines über einem Sensor befindlichen Bereichs mittels der Pulsweitenmodulation aufgelöst wird. Entsprechend gelten die vorangegangenen Ausführungen hinsichtlich einer Pulsweitenmodulation des Signalausgangs der Sensoren und hinsichtlich eines invertierten Betriebs der Sensoren.

Gemäß einer anderen Weiterbildung weist die Stromaufnahme Isup der Sensoren untereinander eine Varianz von maximal 10% auf und/oder die Stromaufnahme jedes Sensors ist stabilisiert oder getrimmt, um eine besonders zuverlässige, fehlerfreie Positionsbestimmung sicherzustellen. In einer weiteren Ausführungsform sind die Abstände zwischen Sensoren zur Vereinfachung der Auswertung gleich.

Gemäß einer Weiterbildung ist das erste Ende des Gebers als Spitze oder als Kante ausgebildet und/oder ein Abstand des Gebers zu der Strecke ist entlang der gesamten Länge des Gebers konstant oder nimmt zumindest im Bereich des ersten Endes zu. Mittels eines sich verjüngenden ersten Endes oder eines von den Sensoren weg gebogenen ersten Endes lässt sich insbesondere die Genauigkeit der mittels Pulsweitenmodulation bestimmten relativen Position innerhalb eines über einem einzelnen Sensor befindlichen Bereichs erhöhen und eine Ausgangskennlinie linearisieren.

In einer weiteren Ausführungsform sind die Sensoren Magnetfeldsensoren, bevorzugt Hall-Sensoren mit lateral- oder vertikal-messenden Hallplatten. In Kombination mit einem zumindest teilweise aus magnetischem Material ausgebildeten Gebers ist mittels Magnetfeldsensoren, insbesondere mittels Hall-Sensoren eine besonders kleine und zuverlässige Positionsbestimmungseinheit realisierbar. Geeignete Magnetfeldsensoren sind beispielsweise 3-Draht Hall-Schalter, 3-Draht Linear Magnetfeldsensoren mit einem Pulsweitenmodulationsausgang oder magnetresistive Sensoren. Hall-Sensoren weisen typischerweise eine oder zwei oder drei vorzugsweise senkrecht zu einander ausgebildete Hall-Platten auf. Hierbei ist der Geber vorzugsweise aus einem permantet-magnetischen Material ausgebildet.

Der Schaltausgang weist gemäß einer Weiterbildung einen open-drain Transistor auf, wobei eine Strombelastbarkeit des open-drain Ausgangs des open-drain Transistor bevorzugt mindestens 100mA und/oder ein Eingangswiderstand des open-drain Transistors bevorzugt höchstens $100m\Omega$ beträgt. Um auch bei einer hohen Anzahl von Sensoren den Beitrag aller eingeschalteten Sensoren zu dem zu messenden Summenstrom sicherzustellen, muss die Strombelastbarkeit der open-drain Transistoren der Sensoren möglichst hoch sein. Um auch bei einer hohen Anzahl von Sensoren noch eine möglichst niedrige Versorgungsspannung nutzen zu können, darf der Eingangswiderstand des open-drain Transistors nicht zu hoch sein.

In einer Ausführungsform ist der letzte Sensor durch einen Widerstand ersetzt. Ein definierter Stromlevel wird durch Anpassung des Widerstandswerts des Widerstands an die Versorgungsspannung erreicht.

In einer weiteren Ausführungsform sind die Sensoren zur Positionsbestimmung des Gebers kapazitive Sensoren oder induktive Sensoren.

In einer alternativen Weiterbildung sind die Sensoren als Temperatursensoren, Kraftsensoren oder Drucksensoren ausgebildet, die in einer Reihe angeordnet, die Position eines Gebers (Festkörper, Flüssigkeit oder Gas) über dessen Temperatur-, Kraft- oder Druckeintrag Messen oder es wird die Position eines Schwellwertes eines Temperatur-, Kraft- oder Druckgradienten entlang der Strecke detektiert

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigt:

Figur 1　　eine schematische Ansicht einer ersten Ausführungsform einer erfindungsgemäßen Positionsbestimmungssensoreinheit,

Figur 2　　eine schematische Ansicht einer zweiten Ausführungsform einer erfindungsgemäßen Positionsbestimmungssensoreinheit,

Figur 3　　eine schematische Ansicht einer dritten Ausführungsform einer erfindungsgemäßen Positionsbestimmungssensoreinheit,

Figur 4　　eine schematische Ansicht einer vierten Ausführungsform einer erfindungsgemäßen Positionsbestimmungssensoreinheit

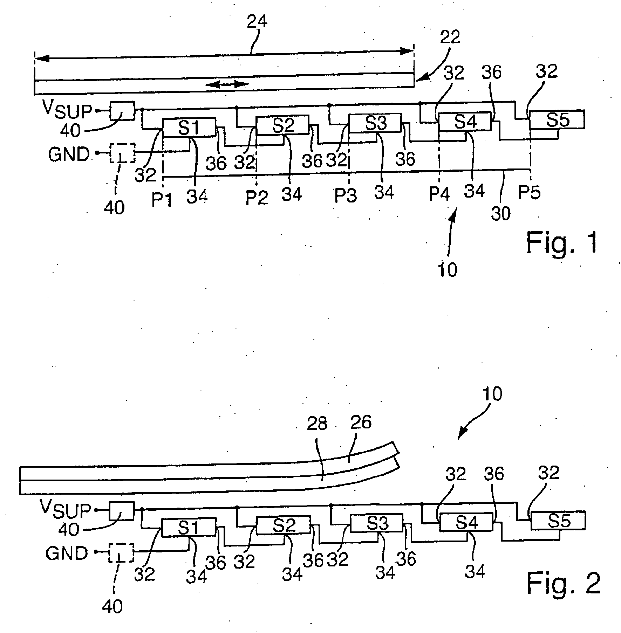

Die Abbildung der Figur 1 zeigt eine schematische Ansicht einer erfindungsgemäßen Positionsbestimmungssensoreinheit 10, aufweisend eine Anzahl N=5 gleichartiger Sensoren Sn=1...N, einen Geber 20 und eine Strommesseinheit 40.

Die Sensoren sind entlang einer Strecke 30 in gleichmäßigen Abständen an Positionen Pn= 1...N angeordnet, wobei ein erster Sensor S1 an einem Anfang der Strecke und ein letzter Sensor SN an einem Ende der Strecke 30 angeordnet ist.

Jeder Sensor Sn weist einen ersten Versorgungsspannungsanschluss 32, einen zweiten Versorgungsspannungsanschluss 34 und einen Schaltausgang 36 auf, wobei der Schaltausgang 36 einen on-Zustand und einen off-Zustand aufweist. Der Schaltausgang 36 eines Sensors Sn schaltet im dargestellten Ausführungsbeispiel in Abhängigkeit von einem ersten Schwellwert aufgrund einer Schwellwertüberschreitung eines Sensorsignals des Sensors Sn in den on-Zustand und aufgrund einer Unterschreitung des ersten Schwellwerts in den off-Zustand.

Der erste Versorgungsspannungsanschluss 32 des ersten Sensors S1 ist an eine Versorgungsspannung Vsup angeschlossen und der zweite Versorgungsspannungsanschluss 34 des ersten Sensors S1 ist an ein Referenzpotential GND angeschlossen, so dass der erste Sensor S1 bei Inbetriebnahme der Positionsbestimmungssensoreinheit 10 immer eingeschaltet ist und daher immer eine Stromaufnahme Isup aufweist.

Alle weiteren Sensoren Sn=2...N sind mittels des jeweiligen ersten Versorgungsspannungsanschlusses 32 ebenfalls an die Versorgungsspannung Vsup angeschlossen. Der zweite Versorgungsspannungsanschluss 34 der weiteren Sensoren Sn=2...N ist jeweils mit dem Schaltausgang 36 des entlang der Strecke 30 unmittelbar vorausgehenden Sensors Sn-1 verbunden. Hierdurch werden die weiteren Sensoren Sn=2...N jeweils mittels des unmittelbar vorausgehenden Sensors Sn-1 aufgrund einer durch den unmittelbar vorausgehenden Sensor detektierten Schwellwertüberschreitung eingeschaltet. In dem eingeschalteten Zustand weisen die weiteren Sensoren Sn=2...N ebenfalls eine Stromaufnahme Isup auf, wobei die jeweiligen Stromaufnahmen aller Sensoren Sn aufgrund der Gleichartigkeit der Sensoren eine geringe Varianz aufweisen.

Zur Kostenreduzierung kann der letzte Sensor SN auch als kostengünstigerer Stromverbraucher, z.B. als Widerstand mit an die Versorgungsspannungen angepasstem Widerstandswert und ohne einen dem Schaltausgang entsprechenden Anschluss ausgebildet sein.

Der Geber 20 ist im dargestellten Ausführungsbeispiel ein Magnet, der ein erstes Ende 22 und eine Länge 24 aufweist. Der Geber 20 ist parallel zu der Strecke 30 bewegbar, wobei sich das erste Ende 22 entlang der gesamten Strecke 30 bewegen lässt und die Länge 24 des Magneten größer oder gleich der Strecke 30 ist.

In dem dargestellten Ausführungsbeispiel ist die Strommesseinheit 40 in der Leitung der ersten Versorgungsspannung Vsup unmittelbar vor einem ersten Spannungsknoten des ersten Sensors S1 eingeschleift ist. Alternativ lässt sich die Strommesseinheit 40 auch in die Leitung für das Referenzpotential GND vor dem zweiten Versorgungsspannungsanschluss 34 einschleifen - gestrichelt dargestellt.

In beiden Ausführungsformen lässt sich mittels der Strommesseinheit 40 ein Summenstrom Isum auf einfache Weise bestimmen, wobei sich der Summenstrom aus den Stromaufnahmen Isup aller eingeschalteter Sensoren Sn ergibt. Der Summenstrom Isum entspricht somit einem Vielfachen m der Stromaufnahme Isup eines einzelnen Sensors Sn:

$$Isum = m * Isup;$$

Im dargestellten Ausführungsbeispiel lässt sich aus der folgenden Gleichung anhand des berechenbaren Faktors m bestimmen, über welchem Sensor Sn sich das erste Ende 22 des Gebers 20 befindet:

$$n = m - 1;$$

Folglich befindet sich das erste Ende 22 an der Position $P_{m-1}$ des $(m-1)$-ten Sensores $S_{m-1}$.

Befindet sich das erste Ende 22 des Gebers 20, wie im Ausführungsbeispiel dargestellt, über dem dritten Sensor S3, also an der Position P3 des dritten Sensors S3, so überdeckt der Geber 20 die Sensoren S1, S2 und S3. Für die Sensoren S1, S2, S3 liegt das jeweilige Sensorsignal über dem ersten Schwellwert, der jeweilige Schaltausgang ist in den on-Zustand geschaltet, so dass sich die Sensoren S1 bis S4 in dem eingeschalteten Zustand befinden. Nur Sensor S5 befindet sich noch in einem ausgeschalteten Zustand. Somit tragen vier Sensoren zu dem Summenstrom Isum bei, der Faktor m beträgt folglich vier.

Zur Erhöhung der Genauigkeit der Positionsbestimmung weisen die Sensoren Sn=1...N gemäß einer Weiterbildung jeweils einen zweiten Schwellwert auf, wobei der zweite Schwellwert kleiner als der erste Schwellwert ist. Bei Überschreiten des ersten Schwellwerts ist der Schaltausgang jedes Sensors in den on-Zustand geschaltet, bei Unterschreiten des zweiten Schwellwerts ist der Schaltausgang jeweils in den off-Zustand geschaltet.

Für zwischen dem ersten Schwellwert und dem zweiten Schwellwert liegende Sensorsignale wird der Schaltausgang pulsweitenmoduliert von dem off-Zustand in den on-Zustand geschaltet. Die Pulsweitenmodulation weist einen Tastgrad auf, der Proportional zu dem Sensorsignal des jeweiligen Sensors ist.

Die Stromaufnahme Ipwm eines pulsweitenmoduliert geschalteten Sensors Sn, also eines mit einem pulsweitenmodulierten Schaltausgang eines unmittelbar vorausgehenden Sensors Sn-1 verbundenen Sensors Sn, ist geringer als die Stromaufnahme Isup eines vollständig eingeschalteten Sensors Sn.

Durch die Proportionalität des Tastgrads der Pulsweitenmodulation zu dem Sensorsignal ist auch die Stromaufnahme Ipwm des pulsweitenmoduliert geschalteten Sensors proportional zu dem Sensorsignal und damit proportional zu der Position des ersten Endes 22 des Gebers im Bereich oberhalb des vorausgehenden Sensors Sn-1. Hierdurch wird die Position Pp des ersten Endes 22 des Gebers 20 im Bereich eines einzelnen Sensors genauer aufgelöst.

Befindet sich das erste Ende 22, wie in Figur 1 dargestellt, über dem dritten Sensor, so setzt sich für die Ausführungsvariante mit Pulsweitenmodulation der Summenstrom Isum aus den Stromaufnahmen Isup der vollständig eingeschalteten Sensoren S1, S2, S3 und der Stromaufnahme Ipwm des Sensors S4 zusammen, da der Sensor S4 nicht vollständig eingeschaltet ist, sondern von dem pulsweitenmoduliert geschalteten Schaltausgang des Sensors S3 entsprechend pulsweitenmoduliert eingeschaltet wird. Der Sensor S5 trägt nicht zu dem Summenstrom Isum bei:

$$Isum = 3 * Isup + Ipwm.$$

Folglich ist anhand des Vielfachen m der Stromaufnahme Isup, hier drei, ablesbar, über welchem Sensor Sn sich das erste Ende 22 des Gebers befindet. Indem alle möglichen Werte des Stroms Ipwm auf eine einer Breite eines Sensors entlang der Strecke oder auf eine dem Abstand zwischen zwei Sensoren entsprechenden Weg abgebildet werden und der dem gemessenen Strom Ipwm Anteil an der Breite oder dem Weg bestimmt wird, kann die Position des ersten Endes 22 des Gebers 20 im Bereich des dritten Sensors genauer bestimmt werden.

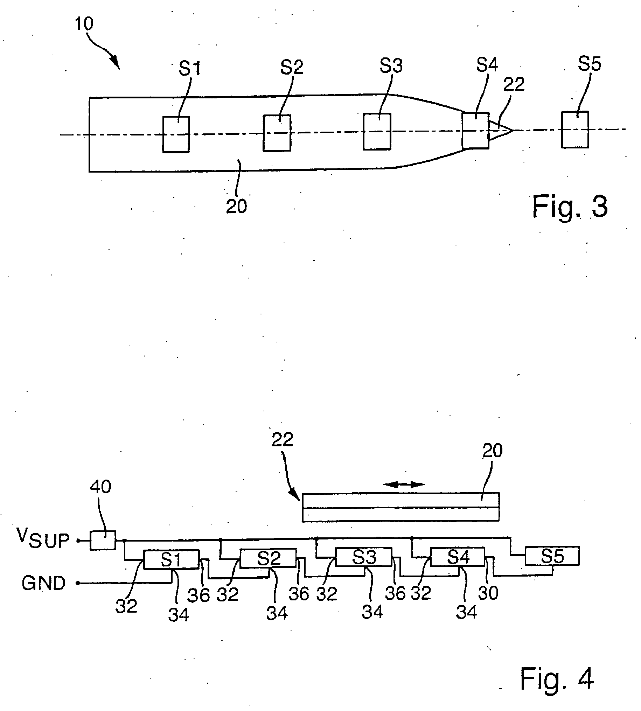

In den Abbildungen der Figuren 2 und 3 sind vorteilhafte Weiterbildungen der in Figur 1 gezeigten Ausführungsform dargestellt. Im Folgenden werden nur die Unterschiede zu der Abbildung der Figur 1 erläutert. Während der in Figur 1 dargestellte Geber 20 über die gesamte Länge 24 des Gebers 20 einen konstanten Abstand zu der Strecke 30 aufweist, nimmt der Abstand des in Figur 2 dargestellten Geber 20 in Richtung des ersten Endes 22 zu, da der Geber 20 in einem Bereich vor dem ersten Ende 22 gebogen ausgebildet ist. Ferner ist in Figur 2 der Verlauf eines ersten Pols 26 und eine zweiten Pols 28 innerhalb des als Magneten ausgebildeten Gebers 20 skizziert.

In Figur 3 ist eine Positionsbestimmungseinheit 10 in einer Aufsicht skizziert. Für eine bessere Übersichtlichkeit sind nur der Geber 20 und die Sensoren Sn dargestellt. Der in Figur 3 dargestellte Geber 20 weist ein spitz zulaufendes erstes Ende 22 auf.

Die in den Figuren 2 und 3 dargestellten Ausführungsformen des ersten Endes 22 des Gebers 20 ermöglichen es, die Genauigkeit der Positionsbestimmung bei einem pulsweitenmodulierten Betrieb zu erhöhen.

In der Abbildung der Figur 4 ist eine weitere Ausführungsform einer Positionsbestimmungssensoreinheit dargestellt. Im Folgenden werden nur die Unterschiede zu der Abbildung der Figur 1 erläutert. Die dargestellten Sensoren Sn sind invertierend, so dass die Schaltausgänge der Sensoren jeweils bei Überschreiten des ersten Schwellwerts in den off-Zustand und bei Unterschreiten des ersten Schwellwerts in den on-Zustand schalten.

Der Geber 20 erstreckt sich von dem ersten Ende 22 in Richtung des letzten Sensors SN, wobei die Länge 24 des Gebers 20 nur einen Teilbereich der Strecke 30 überdeckt.

Bei Abwesenheit des Gebers 20 befinden sich alle Sensoren Sn in dem eingeschalteten Zustand, da für jeden Sensor Sn der erste Schwellwert unterschritten ist und das Ausgangssignal 36 in den on-Zustand geschaltet ist.

Befindet sich das erste Ende 22 des Gebers in einem Bereich eines m-ten Sensors, z.B. wie dargestellt in dem Bereich des dritten Sensors S3, also an der Position P3, so überschreitet das Sensorsignal des dritten Sensors S3 den ersten Schwellwert und das Ausgangssignal 36 des dritten Sensors S3 ist in den off-Zustand geschaltet. Hierdurch befinden sich alle folgenden Sensoren S4, S5 in dem ausgeschalteten Zustand und weisen keine Stromaufnahme Isup auf. Zu dem Summenstrom Isum tragen nur die Stromaufnahmen Isup der entlang der Strecke vorausgehenden Sensoren S1 und S2 bei. Somit kann anhand des Faktor m aus Isum = m* Isup der Sensor Sn bzw. die Position Pn des Sensors Sn, an der sich das erste Ende 22 des Gebers 20 befindet, wie folgt bestimmt werden:

$$n = m;$$

Die hinsichtlich des Ausführungsbeispiels gemäß Figur 1 beschriebene Pulsweitenmodulation sowie die in den Figuren 2 und 3 beschriebenen Ausführungsformen des ersten Endes des Gebers 20 zur Erhöhung der Genauigkeit der Positionsbestimmungen sind hinsichtlich der Figur 4 beschriebenen invertierten Modus entsprechend möglich.

**Patentansprüche**

1. Positionsbestimmungssensoreinheit (10),

  - aufweisend eine Anzahl von N, in vorbestimmten Abständen an Positionen (Pn) entlang einer Strecke angeordneten, gleichartigen Sensoren (Sn=1..N) und einen Geber (20),
  - wobei der Geber (20) ein zumindest entlang der gesamten Strecke bewegbares erstes Ende (22) und eine von dem ersten Ende (22) parallel zu der Strecke (24) verlaufende Länge (24) aufweist,
  - wobei jeder Sensor (S1, S2, bis Sn) einen ersten Versorgungsspannungsanschluss (32), einen zweiten Versorgungsspannungsanschluss (34) und einen Schaltausgang (36) aufweist,
  - wobei der Schaltausgang (36) in Abhängigkeit von einer Schwellwertüberschreitung oder einer Schwellwertunterschreitung eines Sensorsignals in einen on-Zustand oder einen off-Zustand geschaltet ist,
  - wobei der Versorgungsspannungsanschluss (32) jedes Sensors (Sn=1..N) mit einer Versorgungsspannung (Vsup) verbunden ist,
  - wobei ein erste Sensor (S1) an einem Anfang der Strecke angeordnet ist,
  - wobei ein letzte Sensor (SN) an einem Ende der Strecke angeordnet ist,

**dadurch gekennzeichnet, dass**

  - der zweite Versorgungsspannungsanschluss (34) des ersten Sensors (S1) mit einem Referenzpotential (GND) verbunden ist und der erste Sensor (S1) eine Stromaufnahme Isup aufweist,

der zweite Versorgungsspannungsanschluss (34) jedes weiteren Sensor (Sn>1) mit dem Schaltausgang des vorausgehenden Sensors (Sn-1) verbunden ist, und der jeweilige weitere Sensor (Sn) mittels des Schaltausgangs des vorausgehenden Sensors (Sn-1) einschaltbar oder ausschalbar ist und der jeweilige weitere Sensor (Sn) im eingeschalteten Zustand eine Stromabnahme Isup aufweist,

  - eine Strommesseinheit (40) vorgesehen ist und die Strommesseinheit vor dem ersten Versorgungsspannungsanschluss (32) des ersten Sensors (S1) oder vor dem zweiten Versorgungsspannungsanschluss (34) des ersten Sensors (S1) angeordnet ist,
  - wobei die Stromaufnahmen Isup aller eingeschalteten Sensoren (Sn) zu einem mittels der Strommesseinheit gemessenen Summenstrom Isum beitragen, wobei der Summenstrom Isum ein Vielfaches der Stromaufnahmen Isup beträgt und zu einer Position (Pp) des ersten Endes des Gebers (20) proportional ist.

2. Positionsbestimmungssensoreinheit (10) nach Anspruch 1, **dadurch gekennzeichnet, dass**

  - der on-Zustand des Schaltausgangs jedes Sensors (Sn) bei Überschreiten eines ersten Schwellwerts geschaltet ist
  - der off-Zustand des Schaltausgangs jedes Sensors (Sn) bei Unterschreiten des ersten Schwellwerts geschaltet ist und
  - sich die Länge des Gebers (20) von dem ersten Ende mindestens bis zu dem ersten Sensor S1 erstreckt,
  - wobei eine Position Pp des ersten Endes des Gebers (20) im Bereich der Position Pm des m-ten Sensors Sm einem Summenstrom Isum = (m+1)*Isup entspricht.

**3.** Positionsbestimmungssensoreinheit (10) nach Anspruch 1, **dadurch gekennzeichnet, dass** zur Erhöhung der Genauigkeit der Positionsbestimmung

    - jeder Sensor (Sn) mindestens einen ersten Schwellwert und einen zweiten Schwellwert aufweist und
    - sich die Länge des Gebers (20) von dem ersten Ende (22) mindestens bis zu dem ersten Sensor S1 erstreckt,
    - wobei der zweite Schwellwert kleiner als der erste Schwellwert ist,
    - wobei der on-Zustand des Schaltausgangs jedes Sensors (Sn) bei Überschreiten des ersten Schwellwerts geschaltet ist,
    - wobei der off-Zustand des Schaltausgangs jedes Sensors (Sn) bei Unterschreiten des zweiten Schwellwerts geschaltet ist,
    - wobei der on-Zustand des Schaltausgangs jedes Sensors (Sn) für zwischen dem zweiten Schwellwert und dem ersten Schwellwert liegende Sensorsignale pulsweitenmoduliert geschaltet ist,
    - wobei ein Tastgrad der Pulsweitenmodulation proportional zu dem Sensorsignal ist,
    - wobei die Stromaufnahme Ipwm eines mit dem pulsweitenmoduliert geschalteten Schaltausgangs verbundenen Sensors (Sn+1) proportional zu dem Tastgrad und kleiner als die Stromaufnahme Isup im on-Zustand ist,
    - wobei eine Position (Pp) des ersten Endes des Gebers (20) im Bereich der Position Pm des m-ten Sensors Sm einem Summenstrom Isum = m*Isup + Ipwm entspricht.

**4.** Positionsbestimmungssensoreinheit (10) nach Anspruch 1, **dadurch gekennzeichnet, dass**

    - der off-Zustand des Schaltausgangs jedes Sensors (Sn) bei Überschreitung eines ersten Schwellwerts geschaltet ist,
    - der on-Zustand des Schaltausgangs jedes Sensors (Sn) bei Unterschreiten des ersten Schwellwerts geschaltet ist und
    - sich der Geber (20) von dem ersten Ende zumindest entlang eines Teilbereichs der Strecke in Richtung des letzten Sensors (Sn) erstreckt,
    - wobei eine Position Pp des ersten Endes des Gebers (20) im Bereich der Position Pm des m-ten Sensors Sm einem Summenstrom Isum = m*Isup entspricht.

**5.** Positionsbestimmungssensoreinheit (10) nach Anspruch 1, **dadurch gekennzeichnet, dass** zur Erhöhung der Genauigkeit der Positionsbestimmung

    - jeder Sensor mindestens einen ersten Schwellwert und einen zweiten Schwellwert aufweist und
    - sich der Geber (20) von dem ersten Ende zumindest entlang eines Teilbereichs der Strecke in Richtung des letzten Sensors (Sn) erstreckt,
    - wobei der zweite Schwellwert kleiner als der erste Schwellwert ist,
    - wobei der off-Zustand des Schaltausgangs jedes Sensors bei Überschreiten des ersten Schwellwerts geschaltet ist,
    - wobei der on-Zustand des Schaltausgangs jedes Sensors (Sn) bei Unterschreiten des zweiten Schwellwerts geschaltet ist,
    - wobei der off-Zustand des Schaltausgangs jedes Sensors für zwischen dem ersten Schwellwert und dem zweiten Schwellwert liegende Sensorsignale pulsweitenmoduliert geschaltet ist,
    - wobei der Tastgrad der Pulsweitenmodulation umgekehrt proportional zu dem Sensorsignal ist,
    - wobei die Stromaufnahme Ipwm eines mit dem pulsweitenmoduliert geschalteten Schaltausgangs verbundenen Sensors (Sn+1) proportional zu dem Tastgrad und kleiner als die Stromaufnahme Isup im on-Zustand ist,
    - wobei eine Position Pp des Ersten Endes des Gebers (20) im Bereich der Position Pm des m-ten Sensors Sm einem Summenstrom Isum = (m-1)*Isup + Ipwm entspricht.

**6.** Positionsbestimmungssensoreinheit (10) nach einem der vorhergehenden Ansprüche, **dadurch gekennzeichnet, dass** die Stromaufnahme Isup der Sensoren untereinander eine Varianz von maximal 10% aufweist.

**7.** Positionsbestimmungssensoreinheit (10) nach einem der vorhergehenden Ansprüche, **dadurch gekennzeichnet, dass** die Stromaufnahme jedes Sensors (Sn) stabilisiert oder getrimmt ist.

**8.** Positionsbestimmungssensoreinheit (10) nach einem der vorhergehenden Ansprüche, **dadurch gekennzeichnet, dass** die Abstände zwischen Sensoren (Sn) gleich sind.

**9.** Positionsbestimmungssensoreinheit (10) nach einem der vorhergehenden Ansprüche, **dadurch gekennzeichnet, dass** das erste Ende (22) des Gebers (20) als Spitze oder als Kante ausgebildet ist.

**10.** Positionsbestimmungssensoreinheit (10) nach einem der vorhergehenden Ansprüche, **dadurch gekennzeichnet, dass** ein Abstand des Gebers (20) zu der Strecke entlang der gesamten Länge des Gebers (20) konstant ist oder zumindest im Bereich des ersten Endes (22) zunimmt.

**11.** Positionsbestimmungssensoreinheit (10) nach einem der vorhergehenden Ansprüche, **dadurch gekennzeichnet, dass** die Sensoren (Sn) Magnetfeldsensoren sind.

**12.** Positionsbestimmungssensoreinheit (10) nach einem der vorhergehenden Ansprüche, **dadurch gekennzeichnet, dass** die Sensoren (Sn) Hall-Sensoren mit lateral- oder vertikal-messenden Hallplatten sind.

**13.** Positionsbestimmungssensoreinheit (10) nach einem der vorhergehenden Ansprüche, **dadurch gekennzeichnet, dass** der Schaltausgang einen open-drain Transistor aufweist.

**14.** Positionsbestimmungssensoreinheit (10) nach Anspruch 13, **dadurch gekennzeichnet, dass** eine Strombelastbarkeit eines open-drain Ausgangs des open-drain Transistor mindestens 100mA beträgt.

**15.** Positionsbestimmungssensoreinheit (10) nach Anspruch 13 oder 14, **dadurch gekennzeichnet, dass** ein Eingangswiderstand des open-drain Transistors höchstens 100mΩ beträgt.

**16.** Positionsbestimmungssensoreinheit (10) nach einem der vorhergehenden Ansprüche, **dadurch gekennzeichnet, dass** der letzte Sensor (SN) durch einen Widerstand ersetzt ist.

**17.** Positionsbestimmungssensoreinheit (10) nach einem der vorhergehenden Ansprüche, **dadurch gekennzeichnet, dass** die Sensoren (Sn) als kapazitive Sensoren oder induktive Sensoren oder Temperatursensoren oder Kraftsensoren oder Drucksensoren sind.

**Claims**

**1.** Position determining sensor unit (10), comprising a number of N identical sensors (Sn = 1 ... N), which are arranged at predetermined spacings at positions (Pn) along a path, and a transmitter (20),

- wherein the transmitter (20) has a first end (22) movable at least along the entire path and a length (24) extending from the first end (22) parallel to the path (24),
- wherein each sensor (S1, S2 to Sn) comprises a first supply voltage terminal (32), a second voltage supply terminal (34) and a switch output (36),
- wherein the switch output (36) is switched to an on state or an off state in dependence on a sensor signal exceeding a threshold value or falling below a threshold value,
- wherein the supply voltage terminal (32) of each sensor (Sn = 1 ... N) is connected with a supply voltage (Vsup),
- wherein a first sensor (S1) is arranged at a start of the path and
- wherein a last sensor (SN) is arranged at an end of the path,

**characterised in that**

- the second supply voltage terminal (34) of the first sensor (S1) is connected with a reference potential (GND) and the first sensor (S1) has a current take up Isup,
- the second supply voltage terminal (34) of each further sensor (Sn>1) is connected with the switch output of the preceding sensor (Sn-1) and the respective further sensor (Sn) can be switched on or off by means of the switch output of the preceding sensor (Sn-1) and the respective further sensor (Sn) in the switched-on state has a current take Isup,
- a current measuring unit (40) is provided and the current measuring unit is arranged in front of the first supply voltage terminal (32) of the first sensor (S1) or in front of the second supply voltage terminal (34) of the first sensor (S1),
- wherein the current take Isup of all switched-on sensors (Sn) contribute to a sum current Isum measured by means of the current measuring unit, and wherein the sum current Isum is a multiple of the current take Isup and is proportional to a position (Pp) of the first end of the transmitter (20).

**2.** Position determining sensor unit (10) according to claim 1, **characterised in that**

- the on state of the switch output of each sensor (Sn) is switched when a first threshold value is exceeded,
- the off state of the switch output of each sensor (Sn) is switched when the first threshold value is fallen below and
- the length of the transmitter (20) extends from the first end at least to the first sensor(S1),
- wherein a position (Pp) of the first end of the transmitter (20) in the region of the position (Pm) of the mth sensor (Sm) corresponds with a sum current Isum = (m+1)*Isup.

**3.** Position determining sensor unit (10) according to claim 1, **characterised in that** in order to increase the accuracy of the positional determination

- each sensor (Sn) has at least one first threshold value and second threshold value and

- the length of the transmitter (20) extends from the first end (22) at least up to the first sensor (S1),
- wherein the second threshold value is lower than the first threshold value,
- wherein the on state of the switch output of each sensor (Sn) is switched when the first threshold value is exceeded,
- wherein the off state of the switch output of each sensor (Sn) is switched when the second threshold value is fallen below,
- wherein the on state of the switch output of each sensor (Sn) is switched to be modulated in pulse width for sensor signals lying between the second threshold value and the first threshold value,
- wherein a duty cycle of the pulse-width modulation is proportional to the sensor signal,
- wherein the current take up Ipwm of a sensor (Sn+1) connected with the switch output switched to be modulated in pulse width is proportional to the duty cycle and less than the current take up Isup in the on state, and
- wherein a position (Pp) of the first end of the transmitter (20) in the region of the position (Pm) of the mth sensor (Sm) corresponds with a sum current Isum = m*Isup + Ipwm.

4. Position determining sensor unit (10) according to claim 1, **characterised in that**

- the off state of the switch output of each sensor (Sn) is switched when a first threshold value is exceeded,
- the on state of the switch output of each sensor (Sn) is switched when the first threshold value is fallen below and
- the transmitter (20) extends from the first end at least along a sub-region of the path in the direction of the last sensor (Sn),
- wherein a position (Pp) of the first end of the transmitter (20) in the region of the position (Pm) of the mth sensor (Sm) corresponds with a sum current Isum = m*Isup.

5. Position determining sensor unit (10) according to claim 1, **characterised in that** in order to increase the accuracy of the positional determination

- each sensor has at least one first threshold value and second threshold value and
- the transmitter (20) extends from the first end at least along a sub-region of the path in the direction of the last sensor (Sn),
- wherein the second threshold value is lower than the first threshold value,
- wherein the off state of the switch output of each sensor is switched when the first threshold value is exceeded,
- wherein the on state of the switch output of each sensor (Sn) is switched when the second threshold value is fallen below,
- wherein the off state of the switch output of each sensor is switched to be modulated in pulse width for sensor signals lying between the first threshold value and the second threshold value,
- wherein the duty cycle of the pulse-width modulation is inversely proportional to the sensor signal,
- wherein the current take up Ipwm of a sensor (Sn+1) connected with the switch output switched to be modulated in pulse width is proportional to the duty cycle and less than the current take up Isup in the on state, and
- wherein a position (Pp) of the first end of the transmitter (20) in the region of the position (Pm) of the mth sensor (Sm) corresponds with a sum current Isum = (m-1)*Isup + Ipwm.

6. Position determining sensor unit (10) according to any one of the preceding claims, **characterised in that** the current take up Isup of the sensors amongst one another has a variance of at most 10%.

7. Position determining sensor unit (10) according to any one of the preceding claims, **characterised in that** the current take up of each sensor (Sn) is stabilised or trimmed.

8. Position determining sensor unit (10) according to any one of the preceding claims, **characterised in that** the spacings between the sensors (Sn) are the same.

9. Position determining sensor unit (10) according to any one of the preceding claims, **characterised in that** the first end (22) of the transmitter (20) is formed as a tip or as an edge.

10. Position determining sensor unit (10) according to any one of the preceding claims, **characterised in that** the spacing of the transmitter (20) from the path is constant along the entire length of the transmitter (20) or increases at least in the region of the first end (22).

11. Position determining sensor unit (10) according to any one of the preceding claims, **characterised in that** the sensors (Sn) are magnetic field sensors.

12. Position determining sensor unit (10) according to any one of the preceding claims, **characterised in that** the sensors (Sn) are Hall sensors with laterally or vertically measuring Hall plates.

**13.** Position determining sensor unit (10) according to any one of the preceding claims, **characterised in that** the switch output comprises an open-drain transistor.

**14.** Position determining sensor unit (10) according to claim 13, **characterised in that** a current load capability of an open-drain output of the open-drain transistor is at least 100 mA.

**15.** Position determining sensor unit (10) according to claim 13 or 14, **characterised in that** an input resistance of the open-drain transistor is at most 100 m$\Omega$.

**16.** Position determining sensor unit (10) according to any one of the preceding claims, **characterised in that** the last sensor (SN) is replaced by a resistance.

**17.** Position determining sensor unit (10) according to any one of the preceding claims, **characterised in that** the sensors (Sn) are capacitive sensors or inductive sensors or temperature sensors or force sensors or pressure sensors.

**Revendications**

**1.** Unité de capteur de détermination de position (10),

- présentant un nombre de N capteurs identiques (Sn=1, .., N) disposés à des distances prédéterminées en des positions (Pn) le long d'un tronçon et un émetteur (20),
- dans laquelle l'émetteur (20) présente une première extrémité (22) déplaçable au moins le long de tout le tronçon et une longueur (24) s'étendant depuis la première extrémité (22) parallèlement au tronçon (30),
- dans laquelle chaque capteur (S1, S2 à Sn) présente un premier raccord de tension d'alimentation (32), un deuxième raccord de tension d'alimentation (34) et une sortie de commutation (36),
- dans laquelle la sortie de commutation (36) est commutée dans un état ON ou dans un état OFF en fonction d'un franchissement de seuil vers le haut ou d'un franchissement de seuil vers le bas d'un signal de capteur,
- dans laquelle le raccord de tension d'alimentation (32) de chaque capteur (Sn=1, .., N) est raccordé à une tension d'alimentation (Vsup),
- dans laquelle un premier capteur (S1) est disposé à un début du tronçon,
- dans laquelle un dernier capteur (SN) est disposé à une fin du tronçon,

**caractérisée en ce que**

- le deuxième raccord de tension d'alimentation (34) du premier capteur (S1) est raccordé à un potentiel de référence (GND) et le premier capteur (S1) présente une consommation de courant Isup,
- le deuxième raccord de tension d'alimentation (34) de chaque autre capteur (Sn>1) est raccordé à la sortie de commutation du capteur précédent (Sn-1) et l'autre capteur respectif (Sn) peut être connecté ou déconnecté au moyen de la sortie de commutation du capteur précédent (Sn-1) et l'autre capteur respectif (Sn) dans l'état connecté présente une consommation de courant Isup,
- il est prévu une unité de mesure du courant (40) et l'unité de mesure du courant est disposée avant le premier raccord de tension d'alimentation (32) du premier capteur (S1) ou avant le deuxième raccord de tension d'alimentation (34) du premier capteur (S1),
- dans laquelle les consommations de courant Isup de tous les capteurs connectés (Sn) contribuent à un courant total Isum mesuré au moyen de l'unité de mesure du courant, dans laquelle le courant total Isum vaut un multiple des consommations de courant Isup et est proportionnel à une position (Pp) de la première extrémité de l'émetteur (20).

**2.** Unité de capteur de détermination de position (10) selon la revendication 1, **caractérisé en ce que**

- l'état ON de la sortie de commutation de chaque capteur (Sn) est enclenché en cas de franchissement vers le haut d'une première valeur de seuil,
- l'état OFF de la sortie de commutation de chaque capteur (Sn) est enclenché en cas de franchissement vers le bas de la première valeur de seuil et
- la longueur de l'émetteur (20) s'étend depuis la première extrémité au moins jusqu'au premier capteur S1,
- dans laquelle une position (Pp) de la première extrémité de l'émetteur (20) dans la région de la position (Pm) du mième capteur correspond à un courant total Isum = (m+1)*Isup.

**3.** Unité de capteur de détermination de position (10) selon la revendication 1, **caractérisée en ce que**, pour augmenter la précision de la détermination de position :

- chaque capteur (Sn) présente au moins une première valeur de seuil et une deuxième valeur de seuil et
- la longueur de l'émetteur (20) s'étend depuis la première extrémité (22) au moins jusqu'au premier capteur S1,

- dans laquelle la deuxième valeur de seuil est inférieure à la première valeur de seuil,
- dans laquelle l'état ON de la sortie de commutation de chaque capteur (Sn) est enclenché en cas de franchissement vers le haut de la première valeur de seuil,
- dans laquelle l'état OFF de la sortie de commutation de chaque capteur (Sn) est enclenché en cas de franchissement vers le bas de la deuxième valeur de seuil,
- dans laquelle l'état ON de la sortie de commutation de chaque capteur (Sn) est enclenché avec modulation de largeur d'impulsion pour des signaux de capteur situés entre la deuxième valeur de seuil et la première valeur de seuil,
- dans laquelle un coefficient d'utilisation de la modulation de largeur d'impulsion est proportionnel au signal de capteur,
- dans laquelle la consommation de courant Ipwm d'un capteur (Sn+1) raccordé à la sortie de commutation enclenchée avec modulation de largeur d'impulsion est proportionnelle au coefficient d'utilisation et inférieure à la consommation de courant Isup dans l'état ON,
- dans laquelle une position (Pp) de la première extrémité de l'émetteur (20) dans la région de la position Pm du mième capteur Sm correspond à un courant total Isum = m*Isup + Ipwm.

4. Unité de capteur de détermination de position (10) selon la revendication 1, **caractérisée en ce que**

- l'état OFF de la sortie de commutation de chaque capteur (Sn) est enclenché en cas de franchissement vers le haut d'une première valeur de seuil,
- l'état ON de la sortie de commutation de chaque capteur (Sn) est enclenché en cas de franchissement vers le bas de la première valeur de seuil et
- l'émetteur (20) s'étend depuis la première extrémité au moins le long d'une région partielle du tronçon en direction du dernier capteur (Sn),
- dans laquelle une position Pp de la première extrémité de l'émetteur (20) dans la région de la position Pm du mième capteur Sm correspond à un courant total Isum = m*Isup.

5. Unité de capteur de détermination de position (10) selon la revendication 1, **caractérisée en ce que** pour augmenter la précision de la détermination de position :

- chaque capteur présente au moins une première valeur de seuil et une deuxième valeur de seuil et
- l'émetteur (20) s'étend depuis la première extrémité au moins le long d'une région partielle du tronçon en direction du dernier capteur (Sn),
- dans laquelle la deuxième valeur de seuil est inférieure à la première valeur de seuil,
- dans laquelle l'état OFF de la sortie de commutation de chaque capteur est enclenché en cas de franchissement vers le haut de la première valeur de seuil,
- dans laquelle l'état ON de la sortie de commutation de chaque capteur (Sn) est enclenché en cas de franchissement vers le bas de la deuxième valeur de seuil,
- dans laquelle l'état OFF de la sortie de commutation de chaque capteur est enclenché avec modulation de largeur d'impulsion pour des signaux de capteur situés entre la première valeur de seuil et la deuxième valeur de seuil,
- dans laquelle le coefficient d'utilisation de la modulation de largeur d'impulsion est inversement proportionnel au signal de capteur,
- dans laquelle la consommation de courant Ipwm d'un capteur (Sn+1) raccordé à la sortie de commutation enclenchée avec modulation de largeur d'impulsion est proportionnelle au coefficient d'utilisation et inférieure à la consommation de courant Isup dans l'état ON,
- dans laquelle une position Pp de la première extrémité de l'émetteur (20) dans la région de la position Pm du mième capteur Sm correspond à un courant total Isum = (m-1)*Isup + Ipwm.

6. Unité de capteur de détermination de position (10) selon l'une quelconque des revendications précédentes, **caractérisée en ce que** la consommation de courant Isup des capteurs présente entre eux une variance de 10 % au maximum.

7. Unité de capteur de détermination de position (10) selon l'une quelconque des revendications précédentes, **caractérisée en ce que** la consommation de courant de chaque capteur (Sn) est stabilisée ou lissée.

8. Unité de capteur de détermination de position (10) selon l'une quelconque des revendications précédentes, **caractérisée en ce que** les distances entre des capteurs (Sn) sont égales.

9. Unité de capteur de détermination de position (10) selon l'une quelconque des revendications précédentes, **caractérisée en ce que** la première extrémité (22) de l'émetteur (20) est réalisée en forme de pointe ou d'arête.

10. Unité de capteur de détermination de position (10) selon l'une quelconque des revendications précédentes, **caractérisée en ce qu'**une distance de l'émetteur (20) au tronçon est constante le long de toute la longueur de l'émetteur (20) ou augmente au moins dans la région de la première extrémité (22).

11. Unité de capteur de détermination de position (10) selon l'une quelconque des revendications précédentes, **caractérisée en ce que** les capteurs (Sn) sont des capteurs à champ magnétique.

12. Unité de capteur de détermination de position (10) selon l'une quelconque des revendications précédentes, **caractérisée en ce que** les capteurs (Sn) sont des capteurs de Hall avec des plaques de Hall pour des mesures latérales ou verticales.

13. Unité de capteur de détermination de position (10) selon l'une quelconque des revendications précédentes, **caractérisée en ce que** la sortie de commutation présente un transistor à drain ouvert.

14. Unité de capteur de détermination de position (10) selon la revendication 13, **caractérisée en ce qu'**une capacité de transport de courant d'une sortie à drain ouvert du transistor à drain ouvert vaut au moins 100 mA.

15. Unité de capteur de détermination de position (10) selon la revendication 13 ou 14, **caractérisée en ce qu'**une résistance d'entrée du transistor à drain ouvert vaut au maximum 100 m$\Omega$.

16. Unité de capteur de détermination de position (10) selon l'une quelconque des revendications précédentes, **caractérisée en ce que** le dernier capteur (SN) est remplacé par une résistance.

17. Unité de capteur de détermination de position (10) selon l'une quelconque des revendications précédentes, **caractérisée en ce que** les capteurs (Sn) sont des capteurs capacitifs ou des capteurs inductifs ou des capteurs de température ou des capteurs de force ou des capteurs de pression.

Fig. 1

Fig. 2

10

S1    S2    S3    S4    22    S5

20

Fig. 3

22    20

40

$V_{SUP}$

GND

32    34    36 32    36 32    36 32    34    30

34    34

Fig. 4

**IN DER BESCHREIBUNG AUFGEFÜHRTE DOKUMENTE**

**In der Beschreibung aufgeführte Patentdokumente**

- WO 2015192965 A1
- DE 112009004394 B4